# EUROPEAN PATENT APPLICATION

(11) **EP 0 665 133 A2**
(43) Date of publication of application: **02.08.1995**
(21) Application number: 95300525.3
(22) Date of filing: 27.01.1995
(51) Int. Cl.: B60Q 1/14

(54) **Automatic dimmer controller for automobile headlamps**

(30) Priority: 01.02.1994 CN 94202046
(71) Applicant: SHENYAN ENTERPRISE INT'L PTE LTD., Singapore 2262 (SG)
(72) Inventor: Xu, Hong Cheng, Beijing Chant Electr. Technol. Co., Beijing (CN)
(74) Representative: Driver, Virginia Rozanne

(57) **Abstract**

An automatic dimmer that is actuated automatically during cars' confrontation with each other comprises a housing (8) and a convex lens (3) contained in the housing (8) for receiving the light from a headlamp, the outer surface of the convex lens being covered with a layer of transparent coating film (2) having refractivity higher than that of the lens. The housing (8) is integral with the controller circuit which is of thick film in type thereby reducing the overall dimension of the controller. The interior is compact in structure and is provided with cushioning, loose-preventing structure (9) thereby ensuring the sensitivity of the controller. A further feature is that the universal ball joint (12) having been displaced to the free end of the supporting lever (8a) allows decrement of the controller in its weight. The additional level gauge (4) facilitates the location in installation.

## Description

The present invention relates to an automobile headlamp dimmer controller that is actuated automatically when another car is approaching head-on.

A car travelling at night along a non-illuminated road with the headlight in "high-lamp" position illuminating distant road surface is apt to cause accident if it keeps on directing the glare to a head-on approaching car, thereby affecting the normal operation of the driver in that car. It is therefore provided in the traffic regulation that the head-lights have to be dipped into "low-lamp" position when two cars are 100-200 meters apart and approaching each other. Such a dipping, used to be done by the driver, is carried out by means of an automatic dimmer controller which comes into existence in recent years.

The existing automatic dimmer controller which is, for example, a technical solution in a patent for Application No. 91232502-X provides a photoelectric probe separated from a controller to control a dimmer by receiving light signal from a car approaching at a near distance. A number of defects have been found in the application of such a probe, such as the looseness prone to occur between the components of the probe after usage for a period resulting in displacement of photosensitive sensor and in the misplacement of convergent lens focus which lead to the failure of the controller, the overweight of the probe assembly, the relative difficulty in use and in keeping the alignment of same, and to the misjudgement incurred by interference from stray light etc.

The object of the present invention is to provide a novel technical arrangement for a dimmer controller to overcome the defects residing in the abovementioned application.

The present invention includes the following:
An automatic dimmer controller comprising a housing, a convex lens contained in the housing for receiving the light from a headlamp, and a photoelectric sensor mounted at the focus of the convex lens for receiving the light converged by the lens.

The housing of the controller is a cylindrical cup, the structure of which includes a resilient rubber buffer, a control-circuit chip, a light-transmitting sleeve, a photoelectric sensor, a lens and a convex optic assembly, and a pressing ring. The interrelationship of these components runs as follows: The chip resting on the rubber buffer provided in the bottom of the housing cup is fixedly connected to the sensor located in the central position of the bottom of the light-transmitting sleeve. The rim of the convex lens presses against the periphery of the light-transmitting sleeve and is in turn pressed by the pressure ring, which is integral with the cylindrical cup opening of the housing in close running fit. The conductors of the chip are led out through the housing wall. The probe may be provided with a level gauge of bubble type on the outside of the wall. The housing has an integrated supporting lever with a universal ball joint on its free end matching with a latching bushing of the same type. Integral with the bushing is a positioning clamp. On the outer surface of the convex lens there is a layer of lens the refractivity of which is higher than that of the convex lens. Said layer of lens may be a transparent coating film.

The present invention features in that the probe is integral with the controller circuit, the overall dimension of the controller is reduced by adoption of a thick-film circuit and the interior thereof being compact in structure and, in addition, provided with a cushioning, loose-preventing structure is thereby ensuring the sensitivity of the controller. A further feature is that the universal ball joint having been displaced to the free end of the supporting lever allows decrement of the controller in its weight. The additional level gauge facilitates the location in installation, which is thus ensuring a stable operating condition. Still another feature lies in that on the outer surface of the convex lens, namely the incident surface of the signal, there has been provided with a lens having refractivity higher than that of the convex lens. According to the refraction principle of natural light revealed in the conventional optics, the stray light from both sides of the road surface will be reflected when the incidence thereof is larger than the critical angle of total reflection, while another portion of: stray light of though smaller incidence than the critical angle of total reflection but larger than the convergent incidence of the convex lens after having been refracted to the outer surface of the lens will never reach the contacts of the photosensitive sensor at the focus, which thus, in contrast, eliminates substantial portion of interference caused by the stray light, thereby improving the accuracy in collection of the light signal from the lamp.

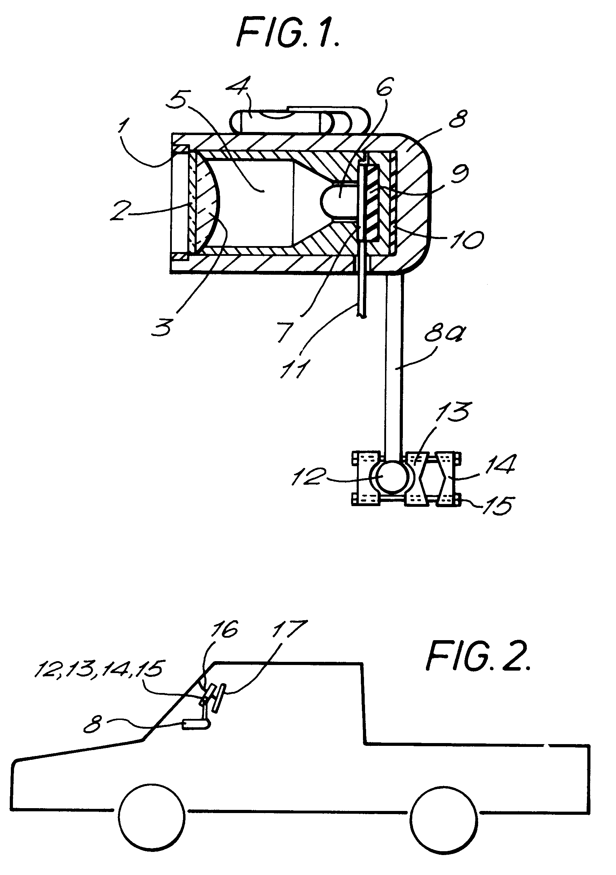

An embodiment of the present invention is illustrated in the accompanying drawings, in which
Figure 1 is the schematic diagram of the overall structure of the present design;
Figure 2 is the schematic diagram of the mounting position of the present design in the driving compartment of a car.

In the drawings, the reference numbers represent:

| | | | |
|---|---|---|---|
| 1. | pressing ring | 2. | organic film |
| 3. | convex lens | 4. | level gauge |
| 5. | light-conducting sleeve | 6. | photosensitive sensor |
| 7. | control-circuit chip | 8. | housing |
| 8a. | housing supporting lever | 9. | cushioning rubber pad |
| 10. | cushioning ring | 11. | signal leads |
| 12. | universal ball joint | 13. | bushing of the ball joint |
| 14. | locating clamp | 15. | latching bolt |

The present invention will be specifically described in combination with the drawings.

The controller according to the present invention has a housing 8, the interior part of which is in a shape of cylindrical cup with a cushioning cup 10 situated at its bottom and a resilient rubber pad 9 located therein. On the pad 9 there lies a control-circuit chip 7 integrated with a photosensitive sensor 6, which is arranged in the centre of the base of a light-conducting sleeve 5 at the focus of a convex lens 3. The peripheral edge of the sleeve presses against the chip. The outer surface of the convex lens is covered with a plane lens 2 having higher index of refraction, which also may be a layer of transparent organic coating film, for eliminating part of the interference from part of the stray light. The interior surface of the convex lens presses firmly against the light-conducting sleeve 5. A pressing ring 1 pressing the convex lens against the outer periphery of the sleeve 5 is arranged on the peripheral rim of the housing port. The pressing ring 1 and the housing 8 forms a tight fit of engaging type to overcome the drawback of the threaded connection which is prone to looseness under vibration. All parts between the pad 9 and the ring 1 are resiliently pressed in position. No gap will occur due to vibration thereby ensuring assembly accuracy of the controller. A level gauge 4 provided outside the housing 8 is graduated with scale of levelness thus facilitating the location of the convex lens. The housing 8 has an integral supporting lever 8a with a universal ball joint 12 on its free end coordinating with and latched in position by the bushing 13. The bushing 13 integrated with a locating clamp 14 and coordinated by the latching bolt 15 can be conveniently mounted on the frame 16 of the mirror 17 in the driving compartment. Signal lines and power line 8 are led out through the wall of the housing 8.

The controller of the present is small in size, compact in structure, excellent in integrality, easy for installation and is relatively good in prevention of interference from the stray light and in operational stability.

## Claims

1. An automatic dimmer controller comprising a housing, a convex lens contained in the housing for receiving the light from a headlamp, and a photoelectric sensor mounted at the focus of the convex lens for receiving the light converged by the lens, characterized in that the housing of the controller is a cup-shaped envelope with a cylindrical interior, the structure of which including a resilient rubber pad, a control-circuit chip, a light-conducting sleeve, a photosensitive sensor, a convex optic and a pressing ring; the interrelationship of these components runs as follows: the chip lying on the rubber pad provided in the cup bottom of the envelope is fixedly connected with the sensor located in the central position of the bottom of the light-conducting sleeve; the rim of the convex lens presses against the periphery of the light-conducting sleeve is in turn pressed by the pressing ring, which is integrated with the cylindrical cup opening of the housing in close running fit; the conductors of the chip are led out through the housing wall.

2. A controller as claimed in claim 1, characterized in that a level gauge of bubble type is attached on the housing.

3. A controller as claimed in claim 1, characterized in that the housing has an integral supporting lever with a universal ball joint on its free end matching with a latching bushing of the same type; integral with the bushing is a locating gripping clamp.

4. A controller as claimed in claim 1, characterized in that the outer surface of the convex lens is provided with a layer of lens having refractivity higher than that of the convex lens.

5. A controller as claimed in claim 1, characterized in that said lens is a layer of transparent coating film.
